# EUROPÄISCHE PATENTSCHRIFT

(11) **EP 0 544 103 B1**
(45) Veröffentlichungstag und Bekanntmachung des Hinweises auf die Patenterteilung: **08.01.1997**
(21) Anmeldenummer: 92118133.5
(22) Anmeldetag: 23.10.1992
(51) Int. Cl.: A22C 17/00

(54) **Vorrichtung zum Entbeinen der Flügel von Geflügel o.dgl.**
Device for boning poultry wings
Dispositif pour désosser les ailes de volailles

(30) Priorität: 23.10.1991 DE 9113164 U
(43) Veröffentlichungstag der Anmeldung: 02.06.1993
(73) Patentinhaber: SCHAAR TEC SPEZIALMASCHINEN GmbH & Co KG, D-48231 Warendorf (DE)
(72) Erfinder: Lindert, Heinrich, W-4802 Halle/Westf. (DE); Schaarschmidt, Martin, W-4410 Warendorf 2 (DE)
(74) Vertreter: Weber, Joachim, Dr.

(56) Entgegenhaltungen:
- EP-A- 0 280 080
- EP-A- 0 402 647
- EP-A- 0 439 780
- DE-A- 2 047 772
- FR-A- 2 227 827
- FR-A- 2 566 629
- GB-A- 2 124 883
- NL-A- 8 302 495
- US-A- 2 893 051
- US-A- 3 296 654
- US-A- 3 470 581
- US-A- 3 510 908
- US-A- 4 207 653
- US-A- 4 377 884

## Beschreibung

Die Erfindung bezieht sich auf eine Vorrichtung zum Entbeinen (Loslösen des Fleisches) der mit Elle und Speiche als Knochen naturgemäß ausgestatteten Flügel von Geflügel gemäß dem Oberbegriff des Hauptanspruchs. Durch den naturgemäß komplizierten Aufbau der Flügel bei Hühnern, Enten und anderem Geflügel, die mit zwei dünnen Knochen, nämlich Elle und Speiche ausgestattet sind, gibt es bisher keine Vorrichtung, die in zufriedenstellender Weise das Flügelfleisch von den beiden miteinander verbundenen Knochen maschinell loslöst, die keine Verwertung beim Endverbraucher finden und daher im Verkauf des vom Verbraucher gewünschten knochenfreien Fleisches durch Gewichts- und Verpackungsvergrößerung sehr nachteilig sind.

Soweit es bereits bekannt ist, Geflügelfleisch von einem Beinknochen (Keulenknochen) maschinell zu entfernen, so trägt bei einer bekannten Vorrichtung eine umlaufende Kette Halterungen mit Greifarmen jeweils für das Bein, das eine Schneidstation taktweise durchläuft, in der mittels einer Säge der Knochen in seiner Längsrichtung durchschnitten wird und dadurch dann das geteilte Fleisch sich leichter ablösen läßt.

Da bei den dünnen Geflügel-Flügeln ein Längsdurchschneiden nicht möglich ist, sind somit bekannte Vorrichtungen ungeeignet.

Die EP-A1-402647 zeigt ein Verfahren und eine Vorrichtung zum Bearbeiten der Extremitäten von Geflügel oder dergleichen. Die Vorrichtung weist einen umlaufenden Förderer auf, welcher mit Haltevorrichtungen für die Aufnahme und Halterung der zu bearbeitenden Extremitäten versehen ist. Hierbei werden die Mittelgelenke ausgestanzt und die so erzeugten Knochenstümpfe unter Rückhalten des Fleischteils herausgezogen. Durch das Ausstanzen können die Knochen beschädigt werden oder splittern, so daß eine vollständige Entnahme der Knochen nicht immer gewährleistet ist. Insbesondere die dünneren Knochen können nicht immer zuverlässig entfernt werden.

Aufgabe der Erfindung ist es, eine Vorrichtung zum Entbeinen der Flügel von Geflügel o. dgl. zu schaffen, wobei die verhältnismäßig dünnen Knochen (Elle und Speiche) maschinell im Durchlauf oder Taktverfahren vom Geflügelfleisch entblößt und die unterteilten Knochenteile dann automatisch abgeworfen werden.

Erfindungsgemäß wird die Aufgabe durch die Merkmale des Hauptanspruchs gelöst, die Unteransprüche zeigen weitere vorteilhafte Ausgestaltungen der Erfindung.

Die Erfindung zeichnet sich durch eine Reihe erheblicher Vorteile aus:

Gemäß der Erfindung wird bei einer Entbeinvorrichtung für Geflügel mit auf einer in einem Maschinenbett endlos umlaufenden Transporteinrichtung angeordneten Halterungen diese mit je einer Queraufnahme für einen Flügel ausgestattet,die eine die Flügelknochen quer zu deren Längsrichtung zerteilenden Schneidstation mit zwei in Bewegungsrichtung umlaufenden Schneideinrichtungen und anschließend eine das Fleisch o.dgl. vom Knochen ablösende Trenneinrichtung durchlaufen.

Nach dem Durchschneiden der Flügelknochen quer zu ihrer Längsrichtung werden die entstandenen drei Knochenteile jeweils einzeln mittels der Trenneinrichtungen von Fleisch und Haut entblößt und anschließend abgeworden.

Vorzugsweise können die Flügelknochen einzeln mittels Greiferzangen aus dem Fleisch herausgezogen oder mittels Widerlagerplatten,die vorzugsweise gelocht sind,und durchgreifender Stößel aus dem Fleisch durch Druck auf die Enden der Flügelknochen herausgedrückt werden.

Als Halterung für den Flügel kann eine vorzugsweise U-förmige Aufnahmetasche angeordnet sein,deren Innenwandungen den Flügel stützen bezw. zwischen deren senkrechten Seitenwandungen gegebenenfalls mittels einer oberseitige Halteleiste einspannen.

Als Trenneinrichtung können gegeneinander bewegliche Lochplatten vorgesehen sein,deren Löcher dem Durchmesser der Flügelknochen jeweils entsprechen.

Bei einer weiteren bevorzugten Ausführungsform ist seitlich eine verschiebbare Widerlageplatte vorgesehen, die gegen das eine freie Ende des Knochenteiles drückt und damit z.B. 20 mm dieses verschiebt, um die Sehnen vom Knochenumfang abzureißen.

Weiterhin können seitliche Anschläge vorgesehen sein, welche die seitliche Verschiebung der abgetrennten Knochenenden begrenzen.

Die das Fleisch lösenden Trennmesser sind oberhalb dieser U-förmigen vorzugsweise drehbar gelagerten Aufnahmetaschen angeordnet und können gradlinige oder abgewinkelte Schneiden aufweisen. Die Schneiden können auch konkav geformt sein, um sich der Rundform der Knochen anzupassen. Die Trennmesser können auch bei in ihre schlitzförmigen Aufnahme zurückgedrückten Schneiden als Greifer dienen, welche die verdickten abgeschnittenen Endteile der Knochen aus dem Fleisch herausziehen können. Dazu lagern sich die Schneiden in der schlitzförmigen Aufnahme jeweils an eine innere Druckfeder an, durch welche die Schneiden elastisch verschiebbar gelagert sind.

Auf der Zeichnung sind Ausführungsbeispiele der Erfindung dargestellt. Es zeigen :
- Fig.1: eine Seitenansicht (entsprechend Pfeilrichtung in Fig. 1a) eines Flügels mit Knochen entsprechend Fig.2,
- Fig.1a: eine Draufsicht auf denselben Flügel in einer transportablen Aufnahmeeinrichtung,
- Fig.2: ei ne Seitenansicht eines zu entbeinenden Geflügelflügels in gestreckter Lage,
- Fig. 3: eine Draufsicht auf denselben Flügel entsprechend Fig. 1a, jedoch kurz vor dem Einlaufen in eine Schneidstation;
- Fig. 4: eine Draufsicht auf denselben Flügel entsprechend Fig. 3 nach Durchlaufen der Schneidstation;
- Fig. 5: eine Draufsicht auf denselben Flügel entsprechend Fig. 4, wobei die einzelnen Flügelteile zur weiteren Bearbeitung eine gegenüber der Fig. 4 unterschiedliche getrennte Position voneinander einnehmen;
- Fig. 6: eine Draufsicht entsprechend Fig. 5, ohne Darstellung des mittleren Flügelstückes, mit sowohl am Oberflügel als auch am Unterflügel angreifenden Trennmessern;
- Fig. 6a: einen Querschnitt entsprechend Pfeilrichtung VIa in Fig. 6 mit den Trennmessern kurz vor deren Angriff an den Knochen des Unterflügels in gegenüber der Fig. 6 vereinfachte Darstellung;
- Fig. 6b: einen Querschnitt entsprechend Fig. 6a, jedoch mit an den Knochen des Unterflügels anliegenden Trennmessern, ebenfalls in gegenüber der Fig. 6 vereinfachten Darstellung;
- Fig. 7: eine Seitenansicht mit Schnitt von Unterflügel und Oberflügel entsprechend Fig. 6 jedoch mit an den Knochen zu deren Herausziehen anliegenden Greiferzangen;
- Fig. 8: eine Darstellung der einer weiteren Verarbeitung zuzuführenden Endprodukte des Geflügel-Flügels,
- Fig. 10: eine schematische Draufsicht auf eine Aufnahmetasche mit eingelegtem zusammengeklappten Oberflügel und Unterflügel und eine Knochentrenneinrichtung, gemäß einem weiteren Ausführungsbeispiel,
- Fig.11: eine schematische Seitenansicht einer die Unterflügelknochen aus dem umgebenden Fleisch herausdrückender Ablöseeinrichtung (Trenneinrichtung) mit zwei Lochplatten mit je zwei Löchern und zwei Stößeln an einer Lochplatte,
- Fig. 12: eine Draufsicht (Stirnansicht) gemäß Pfeilrichtung III auf die Lochplatten gemäß Fig. 11,
- Fig. 13: eine schmetaische Seitenansicht derselben Ablöseeinrichtung gemäß Fig. 11 mit teilweise herausgelösten Knochen,
- Fig.14: eine schematische Seitenansicht einer den Oberflügelknochen aus dem umgebenden Fleisch herausdrückenden Ablöseeinrichtung mit zwei Lochplatten mit je einem Loch und einem Stößel gemäß Fig. 14,
- Fig.15: eine schematische Stirnansicht gemäß Pfeilrichtung VI einer beweglichen Lochplatte mit einem Loch und einem Stößel gemäß Fig. 14
- Fig.16: eine schematische Seitenansicht auf dieselben gegeneinander beweglichen Lochplatten gemäß Fig. 11 und 13 mit ausgestoßener Elle und Speiche und mit zusammengepreßtem Fleisch,
- Fig.17: eine Seitenansicht eines Flügelknochens mit umgebenden Fleisch sowie mit einer diese haltenden Klammer und Schnitten zweier Bandsägeblätter,
- Fig.18: eine Draufsicht auf die Klammer mit Fleisch und Knochen,
- Fig.19: eine Draufsicht auf eine geöffnete Klammer.

Ein zu entbeinender Geflügel-Flügel hat ein Oberflügelstück (10) und ein Unterflügelstück (11). Das Fleisch des Oberflügelstücks (10) umgibt einen sogenannten Oberflügelknochen (12), das Fleisch des Unterflügelstückes (11) dagegen einen zweiteiligen Unterflügelknochen (13), der naturgemäß eine Elle (13a) und eine Speiche (13b) aufweist. Der Oberflügelknochen (12) einerseits und die Elle (13a) und die Speiche (13b) des Unterflügelknochens (13) andererseits sind über ein Gelenk (14) miteinander bewegbar verbunden.

Die Bearbeitungsvorrichtung zum Entsklettieren von mit etwaiger Elle und Speiche ausgestatteten Flügeln von Geflügel hat eine umlaufende Transportkette (19) einer bodenseitigen Transporteinrichtung mit Halterungen (18) und damit gehaltenen Aufnahmetaschen (15, 16) und einen mittleren Zentrierdorn (17) dazwischen, die eine Schneidstation (21) mit Trennmessern (43, 44, 49, 50 und 35) durchlaufen.

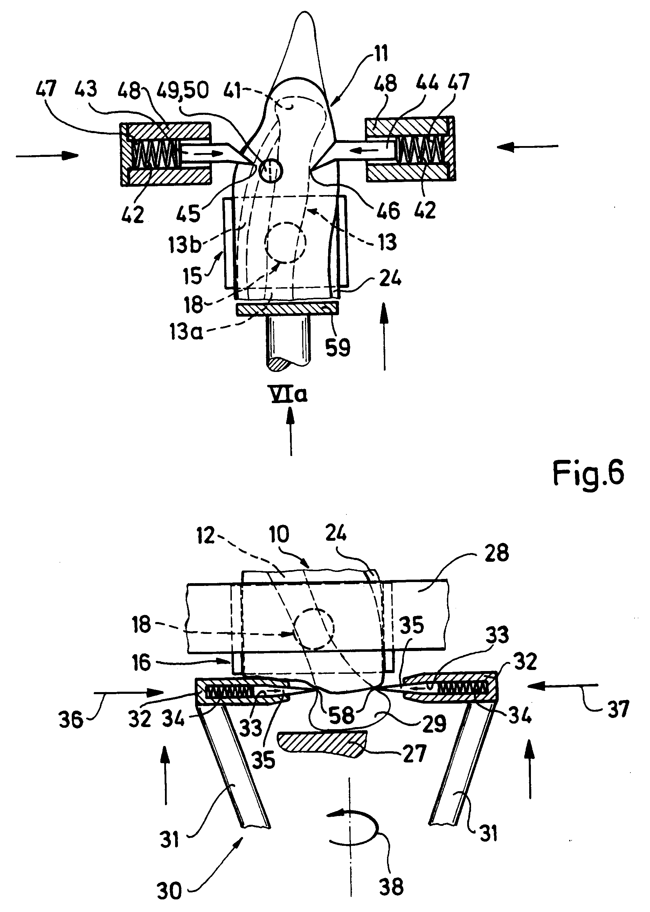

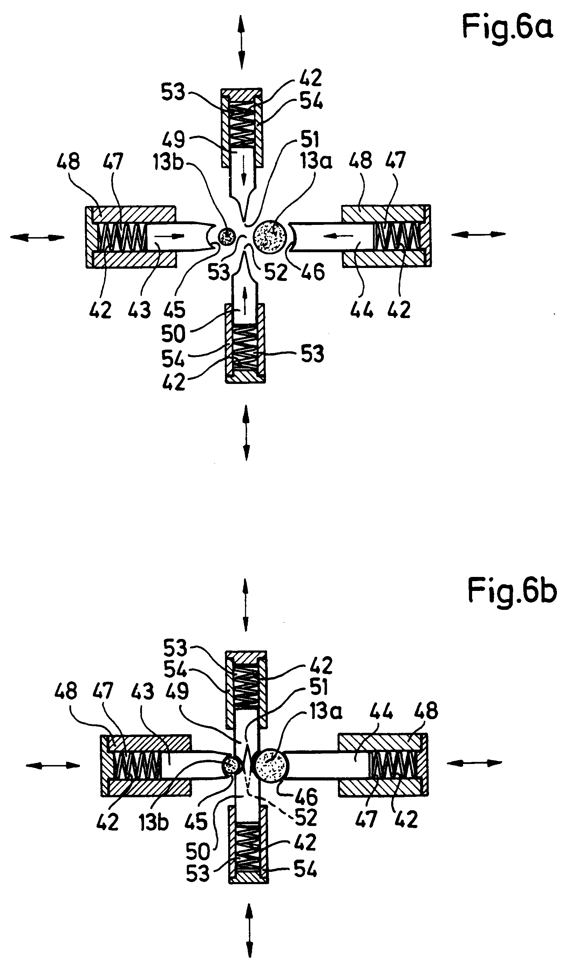

Diese Schneidstation (21) trägt seitliche, sich gegenüberliegende Anschläge (26, 27) und eine obere Festhalteleiste (28), weiterhin sind dabei sowohl seitliche Greifer (30) mit Greiferköpfen (32) an beweglichen Greiferarmen (31) vorgesehen, um den zu bearbeitenden Knochen zu halten und aus dem umgebenden Fleisch zu ziehen; weiterhin sind rotierende Schneidmesser (22) vorgesehen, welche den Knochen in mehrere Stücke quer zerteilen. Die sich paarweise gegenüberstehenden Trennmesser (43, 44, 49, 50) Fig. 6a, 6b sind in der Schneidstation verschiebbar gelagert, welche das Fleisch von den Knochen lösen.

Eine seitliche Widerlagerplatte (59) ist ebenfalls verschiebbar gelagert und hat die Aufgabe, das getrennte Knochenteil (13) zum Ausreißen der Fleischsehnen um 10 bis 20 mm zu verschieben.

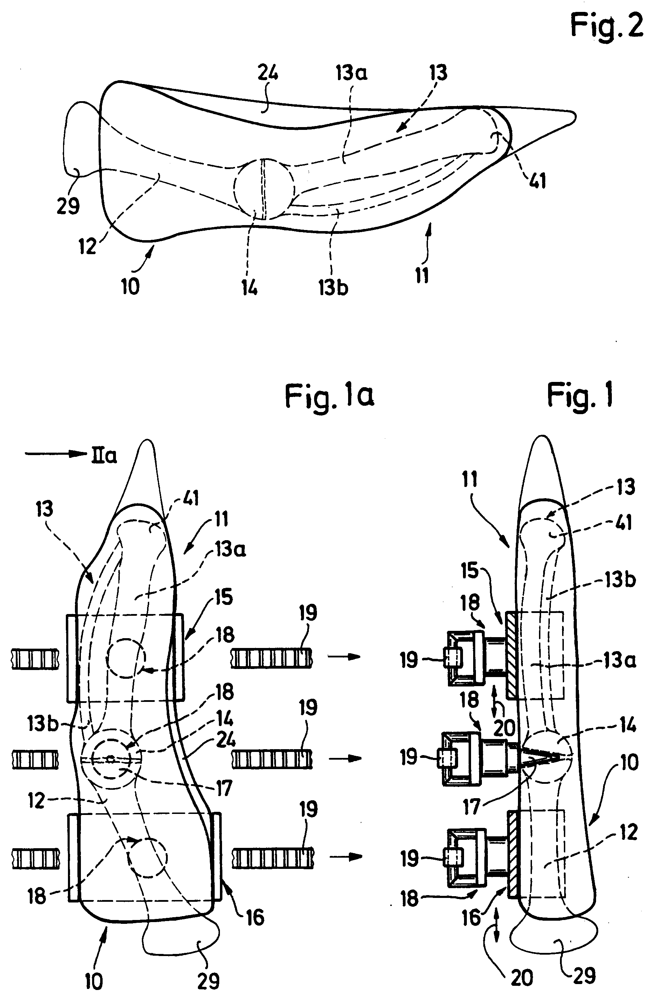

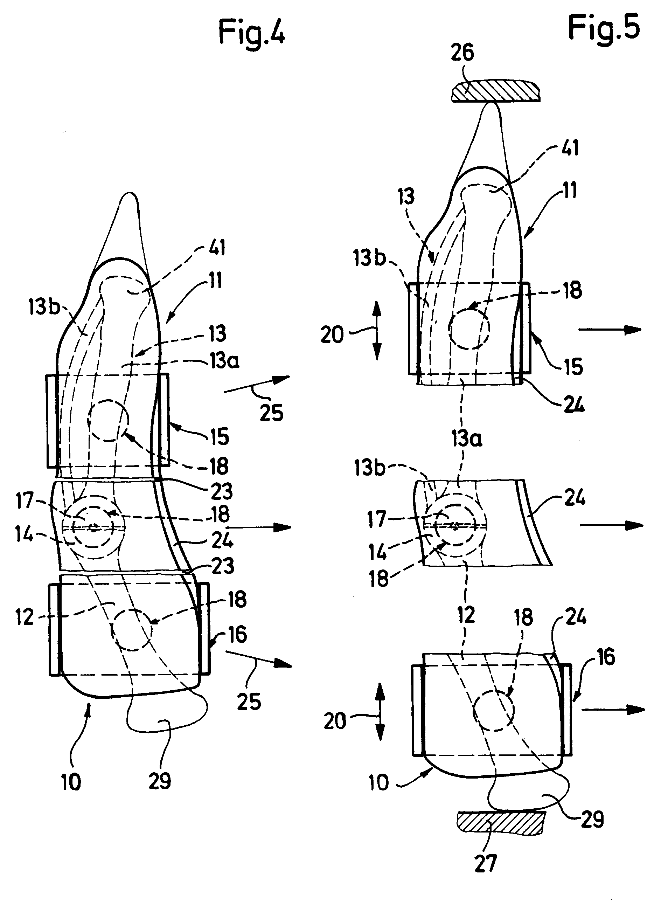

Um die Knochen (12, 13) aus dem Fleisch zu entfernen, wird der Flügel in zwei in einem Abstand zueinander angeordneten Aufnahmetaschen (15, 16) eingelegt (Fig. 2 bis 7). Diese Aufnahmetaschen (15, 16) haben einen in etwa U-förmigen Querschnitt, welcher damit der anatomischen Form des Flügels angepaßt sein kann. Die Aufnahmetaschen können starr oder bevorzugt leicht drehbar auf dem Transportsystem gelagert sein.

Zwischen den beiden Aufnahmetaschen (15, 16), sowohl in einem Abstand zur Aufnahmetasche (15), als auch in einem Abstand zur Aufnahmetasche (16) ist der Zentierdorn (17) angeordnet. Die Spitze dieses Zentrierdornes (17) zeigt dabei in eine genau entgegengesetzte Richtung gegenüber der Einlegerichtung des Flügels in die Aufnahmetaschen (15, 16). Die Aufnahmetaschen (15, 16) sowie der Zentrierdorn (17) sind über Halterungen (18) o. dgl. in bekannter Art und Weise mit einer Transporteinrichtung wie endlos umlaufender Kette (19), Band o. dgl. verbunden.

Ein Flügel wird derart in die Aufnahmetaschen (15, 16) eingelegt, daß beim Einlegevorgang das Gelenk (14) auf dem Zentrierdorn (17) aufgespießt wird. Bei in diese Aufnahmetaschen (15, 16) eingelegtem Flügel verläuft die Knochenlängsrichtung, sowohl des Oberflügelknochens (12) als auch des Unterflügelknochens (13) in etwa in einem rechten Winkel (waagerecht) zur Transportrichtung (19) der Transportkette o.dgl. Diese Aufnahmetaschen (15, 16) sind so auf der Transporteinrichtung angeordnet, daß sie senkrecht zur Transportrichtung der Transportkette (19) o. dgl. entsprechend der Pfeilrichtung (20) verschiebbar sind.

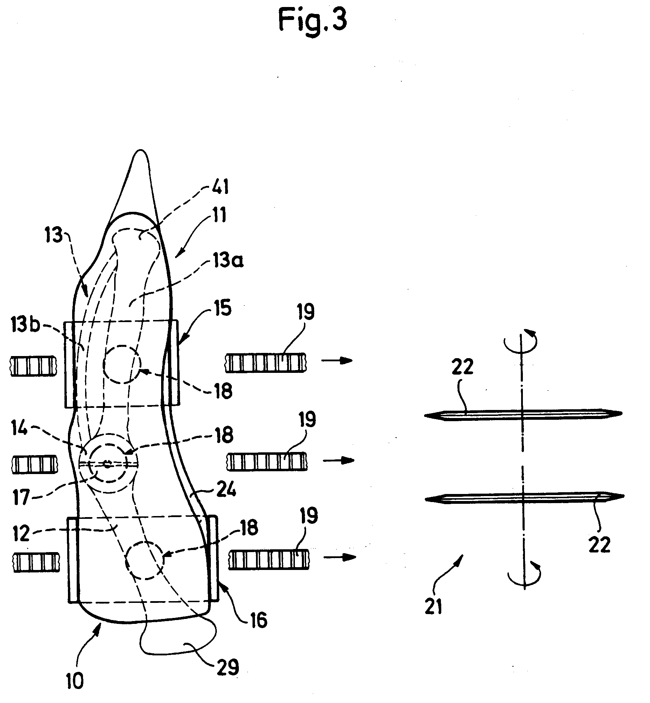

In dieser durch den Zentrierdorn (17) und diese Aufnahmetaschen (15, 16) lagebestimmten Positionierung des Flügels wird dieser einer Schneidstation (21) (Fig. 3) zugeführt. Die Schneidstation (21) kann stationär gelagert sein und aus kreisförmigen Schneid-messern (22), Sägeblätter o. dgl. bestehen. Die Drehrichtung der Schneidmesser (22) ist dabei bevorzugt entgegengesetzt der Trans-portrichtung der Transportkette (19). Beim Durchlaufen der Schneidstation (21) werden - in Knochenlängsrichtung gesehen - oberhalb und unterhalb des Gelenkes (14) Schnitte (23) einge-bracht, durch die das Gelenk (14) aus dem Flügel herausgetrennt wird. Außerdem wird hierbei eine äußere Verbindungshaut (24) zwischen Oberflügelstück (10) und Unterflügelstück (11) getrennt.

Die Aufnahmetaschen (15, 16) nehmen erst nach dem Trennschnitt ihre senkrechte Stellung (Aufrichten) mittels einer geeigneten Bewegungseinrichtung ein.

Das Oberflügelstück (10) und das Unterflügelstück (11) werden nun einer weiteren Bearbeitung zugeführt, wobei das Gelenk (14) mit daran anhaftenden Hautresten als Abfallprodukt angesehen werden kann und somit keiner weiteren Bearbeitung mehr bedarf.

Nach erfolgtem Schnitt (23) werden das Oberflügelstück (10) und das Unterflügelstück (11) entgegengesetzt voneinander diagonal nach außen, d.h. vom Gelenk (14) weg entsprechend Pfeilrichtung (25), in ihren Aufnahmetaschen (15, 16) liegend, weitertransportiert, bis sie jeweils an einen seitlichen äußeren Anschlag (26 bzw. 27) stoßen. Durch das Anstoßen von Unterflügelstück (11) und Oberflügelstück (10) jeweils an dem seitlich äußeren Anschlag (26 bzw. 27) wird ein sonst möglicher seitlicher Weitertransport der Flügelstücke (10, 11) gestoppt: sowohl das Unterflügelstück (11) als auch das Oberflügelstück (10) haben jeweils die für eine Weiterverarbeitung notwendige Ausgangslage errreicht, wobei diese Weiterverarbeitung nach erfolgtem Anstoßen der Flügelstücke (10, 11) an den seitlichen Anschlägen (26, 27) und dem dadurch hervorgerufenen Transportstopp der Flügelstücke (10, 11) einsetzt.

Das Oberflügelstück (10) wird beim Transport in Pfeilrichtung (25) unter die obere Festhalteleiste (28) o.dgl. gefahren, wobei die Endlage des Oberflügelstückes (10) unterhalb dieser Fest-halteleiste (28) erreicht ist, wenn das Oberflügelstück (10) an einem seitlichen Anschlag (27) anstößt. Durch diese obere Festhalteleiste (28) wird eine für die weitere Bearbeitung notwendige Lagefixierung des Oberflügelstückes (10) erreicht.

Die endseitige Knochenkugel (29) des Oberflügelknochens (12) wird von einem zangenförmig ausgebildeten Greifer (30) hintergriffen. Dieser Greifer (30) hat z.B. zwei sich gegenüberliegende und um eine in waagerechter Achse sich drehende Greiferarme (31), an deren einem Ende jeweils ein Greiferkopf (32) angeordnet ist. Die Längsrichtungen von Greiferarm (31) und Greiferkopf (32) verlaufen dabei in einem Winkel zueinander. Der Greiferkopf (32) weist eine z.B. in seiner Längsrichtung verlaufende Aufnahmeausnehmung (33) auf. In dieser Aufnahmeausnehmung (33) ist ein unter der Vorspannung einer Druckfeder (34) stehendes Messer (35) seitlich verschiebbar gelagert. Das Messer (35) läßt sich dabei in bzw. entgegengesetzt der Transportrichtung der Transportkette (19), wie sie in Fig. 3 dargestellt ist, verschieben. Die senkrechte Schneide (58) des Messers (35) ist geradlinig ausgebildet, sie kann aber auch eine konkave Form aufweisen. Bei ihrem Schließen, d.h. beim Bewegen des Greiferarmes (31) und damit auch des Greiferkopfes (32) in Pfeilrichtung (36) bzw. in Pfeilrichtung (37) legen sich die Messer (35) - die Knochenkugel (29) hintergreifend - am Oberflügelknochen (12) an. Der geschlossene, unter einer gewissen Vorspannung stehende zangenförmig ausgebildete Greifer (30) wird nun - entsprechend Pfeilrichtung (38) um eine waagerechte Achse - in Rotation versetzt. Hierdurch löst sich das Fleisch etwas vom Knochen, was ein späteres Herausziehen des Knochens (12) aus dem Oberflügelstück (10) erleichtert.

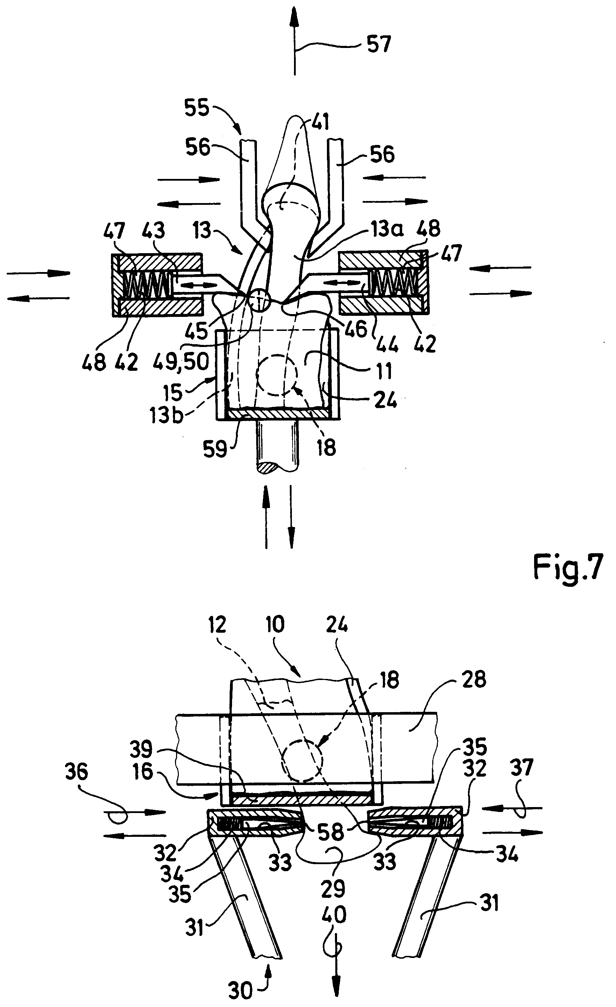

Nach Beendigung der Rotationsbewegung des zangenförmigen Greifers (30) wird zwischen Greiferkopf (32) und dem Fleisch des Oberflügelstücks (10) ein Abstreifblech (39), Fig. 7, o.dgl. geschoben. Das Abstreifblech (39) hat den Zweck, das Fleisch während des Herausziehens des Obergeflügelknochens (12) aus dem Oberflügelstück (10) durch den Greifer (30) zurückzuhalten. Das Abstreifblech (39) kann auch stationär angeordnet sein. In diesem Fall würde das Oberflügelstück (10) mit seinem Oberflügelknochen (12) in das Abstreifblech (39) gefahren.

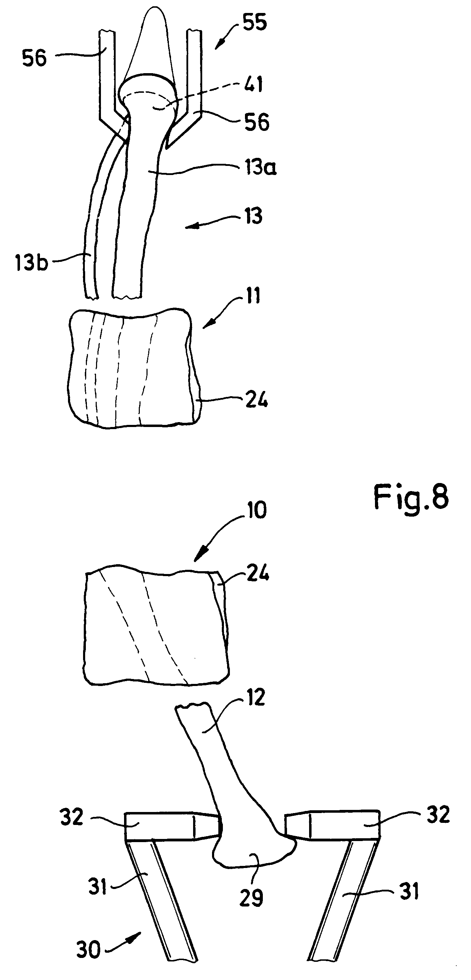

Nachdem das Abstreifblech (39) in Position gebracht worden ist, wird der zangenförmig ausgebildete Greifer (30) noch weiter geschlossen, d.h. die Greiferarme (31) werden noch weiter aufeinander zubewegt, so daß sie in etwa die in Fig. 7 dargestellte Lage einnehmen. Ist diese erreicht, so wird der Greifer (30) entsprechend Pfeilrichtung (40) verfahren, bis er die in Fig. 8 dargestellte Lage erreicht hat, d.h. bis der Oberflügelknochen (12) vollständig aus dem Oberflügelstück (10) herausgezogen ist. Das Fleisch des Oberflügelstückes (10) wird nun der weiteren Verarbeitung, z.B. der Herstellung von Geflügelwurst, Geflügelleberwurst oder anderer Feinkostartikel zugeführt.

Bei diesem Arbeitsgang ist der Anschlag (26) aus der Bewegungsbahn entfernt zu sein.

Parallel zur Entfernung des Oberflügelknochens (12) aus dem Oberflügelstück (10) erfolgt der Ablauf zur Entfernung der Elle (13a) und der Speiche (13b) - die zusammen den Unterflügelknochen (13) bilden - aus dem Unterflügelstück (11).

Entsprechend der Darstellung in Fig. 6 greifen unterhalb einer Knochenkugel (41) des Unterflügelknochens (13) vier unter Einwirkung jeweils einer Druckfeder (42) stehende Trennmesser (43, 44) im Bereich von Elle (13a) und Speiche (13b) an:

Von zwei sich in einem Abstand gegenüberliegenden Trennmessern (43, 44) wird das eine Trennmesser (43) von außen her unter starkem Druck an die Speiche (13b) des Geflügelknochens (13) angedrückt. Ein anderes Trennmesser (44) wird gleichzeitig hierzu ebenfalls unter starkem Druck an die Elle (13a) des Unterflügelknochens (13) angedrückt. Die Schneidgeometrie dieser beiden Trennmesser (43, 44) weist vorzugsweise eine konkave Form auf. Diese so ausgebildeten Schneiden (45, 46) legen sich daher in etwa kreisbogenförmig um die Elle (13a) bzw. um die Speiche (13b) des Unterflügelknochens (13) an diese an. Die Bewegung der Trennmesser (43, 44) auf die jeweiligen Knochen zu erfolgt in bzw. entgegengesetzt der Transportrichtung der Transportkette (19). Die Trennmesser (43, 44) sind in der Aufnahmeausnehmung (47) jeweils eines Aufnahmegehäuses (48) unter Einwirkung der schon erwähnten Druckfeder (42) seitlich verschiebbar gelagert. Um auch das Fleisch zwischen Elle (13a) und Speiche (13b) lösen zu können, werden in diesen Bereich entsprechend der Darstellung in den Figuren 6, 6a, 6b unmittelbar unterhalb der Knochenkugel (43), senkrecht und im rechten Winkel sowohl von "unten" als auch von "oben" ebenfalls weitere Trennmesser (49, 50) eingeführt. Diese Trennmesser (49, 50) sind vorzugsweise in etwa keilförmig ausgebildet, wobei ihre Spitze (51 bzw. 52) jeweils in den Freiraum (53) zwischen Elle (13a) und Speiche (13b) eindringt. Diese Trennmesser (49, 50) überlappen sich entsprechend der Darstellung in Fig. 6b in diesem Zustand und liegen jeweils auf einem Teil der Querschnitts-Peripherie von Elle (13a) und Speiche (13b) an. Diese Trennmesser (49, 50) dienen somit auch gleichzeitig als Gegenhalter bzw. als sogenante "Gegendrücker" für die schon zuvor in Position gebrachten anderen Trennmesser (43, 44).

Die unter einer gewissen Vorspannung durch die Druckfedern (42) stehenden weiteren Trennmesser (49, 50) sind jeweils in einer Aufnahmeausnehmung (53) eines Aufnahmegehäuses (54) entsprechend der Einführrichtung zwischen Elle (13a) und (13b) verschiebbar gelagert. Durch das Einbringen der Trennmesser (43, 44, 49, 50) entsprechend der Darstellung in Fig. 6b und 7 wird das Fleisch des Unterflügelstückes (11) in etwa entsprechend der Darstellung in Fig. 7 senkrecht zur Förderrichtung der Transportkette (19) zurückgedrückt.

Sind die Trennmesser (43, 44, 49, 50) in Position, entsprechend der Darstellung in Fig. 6 und 7, werden die Elle (13a) und die Speiche (13b) und somit der gesamte Unterflügelknochen (13) in Unterflügelknochenlängsrichtung um etwa 20 mm nach außen im rechten Winkel, senkrecht entgegengesetzt der Transportrichtung der Transportkette (19) verschoben. Zur Verschiebung dient eine Widerlageplatte (59), die z.B. pneumatisch o.dgl. in die Auf-nahmetasche (15) entsprechend der Darstellung in Fig. 7 einge-fahren wird. Bei dieser Verschiebebewegung reißen die Sehnen und das Fleisch des Unterflügelstückes (11) wird von den Trennmessern (43, 44, 49, 50) zurückgehalten, während die Knochen weiter nach außen gedrückt werden, vorzugsweise zu etwa einem Drittel ihrer Länge.

Nach Beendigung dieses Vorganges wird die Knochenkugel (41) des Unterflügelknochens (13) durch eine sogenannte Greiferzange (55) hintergriffen. Diese Greiferzange (55) wird geschlossen und nimmt dabei die in Fig. 7 dargestellte Position ein, wobei die beiden Greiferarme (56) dieser Greiferzange (55) unterhalb der Knochenkugel (41) des Unterflügelknoches (13) an Elle (13a) und Speiche (13b) direkt anliegen. Die Greiferzange (55) wird nun entsprechend in Pfeilrichtung (57) verfahren, so daß der gesamte Unterflügelknochen (13) aus dem Unterflügelstück (11) herausgezogen wird.

Die beiden zuvor beschriebenen Vorgänge, nämlich das Entfernen des Oberflügelknochens (12) und des Unterflü+gelknochens (13) erfolgen parallel zueinander, so daß nach Entfernung dieser beiden Knochen das Fleisch, entsprechend der Darstellung in Fig. 8, sowohl des Oberflügelstückes (10) als auch des Unterflügelstückes (11), für eine weitere Verarbeitung zur Verfügung steht.

Die zuvor beschriebene Entsklettierung von Geflügel-Flügeln wird vorzugsweise bei Puten eingestzt. Es ist jedoch auch möglich die Flügel anderer Geflügelarten z.B. die von Huhn, Hahn, Ente, Gans, Fasan usw. zu entsklettieren. Auch ist die Vorrichtung zur Entsklettierung entsprechender Extremitäten der anderen Tiere wie Hasen, Kaninchen usw. denkbar.

Auf den Zeichnungen 10 ff ist ein weiteres Ausführungsbeispiel der Erfindung dargestellt.

Dabei ist mit (60) ein Oberflügelstück und mit (61) ein Unterflügelstück eines Geflügelflügels bezeichnet,die derart gegeneinander zusammengeklappt sind,daß das verbindende Gelenk (64) an einem Ende und eine Knochenkugel (81) am gegenüberliegenden Ende von Elle(63a) und Speiche (63b) des Unterflügelknochens (63) sowie eine weitere Knochenkugel(79) des Oberflügelknochens (62) andererseits vorstehen.Dabei liegen der Unterflügelknochen (63) und der Oberflügelknochen (62) etwa parallel und sind jeweils von gewachsenem Fleisch und deren Haut (64a) umgeben.

Der zu entskeletierende Flügel ist dadurch zur Entbeinung vorbereitet,daß seine nicht zu verwertende Flügelspitze (nicht dargestellt) vorher abgeschnitten ist.

Eine maschinelle Bearbeitungsvorrichtung zum Entbeinen derartiger Zusammengeklappter Ober-und Unterflügelstücke (60,61) hat umlaufende endlose Transportketten(69) in einem bodenseitigen Maschinengestell (89)-ebenso wie bei dem Ausführungsbeispiel gemäß Fig.1 bis 8-mit einem geeigneten Antrieb und Führungen(nicht dargestellt) und weist Halterungen (68) und davon gehaltene Aufnahmetaschen (65) auf,die so auf der Transportkette (69) gelagert sind,daß sie leicht schwenkbar (drehbar) oder senkrecht zur Transportrichtung verschiebbar sind.

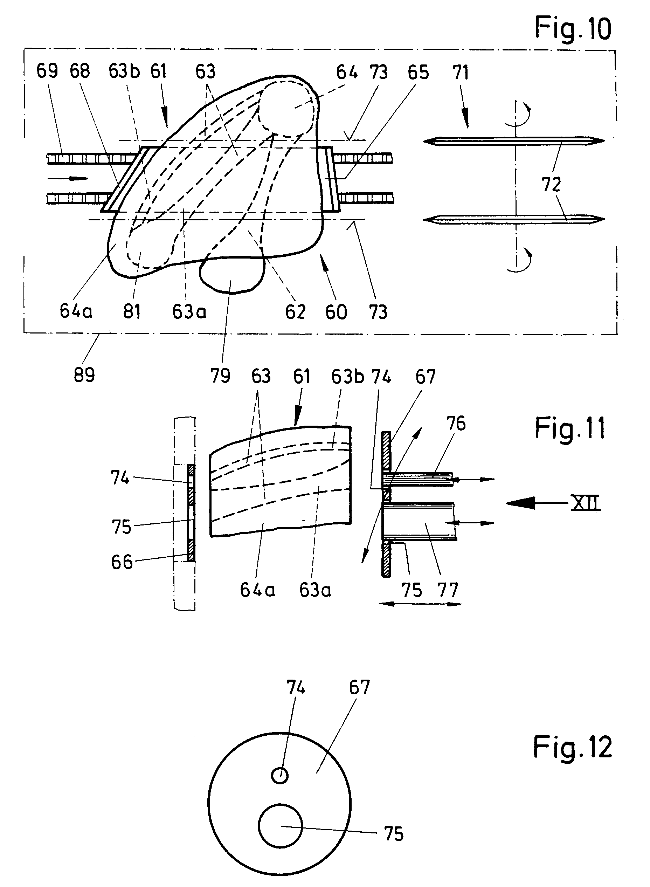

Um das Gelenk (64) bezw. die Knochenkugeln ( 79,81) von den Geflügelknochen (62,63) zu trennen,erstreckt sich die Längsrichtung der Aufnahmetasche(65) unter einem Winkel von 30^{o} bis 50^{o} (Fig.10) zu ihrer Bewegungsrichtung und wird so von einer Schneidstation (71) bearbeitet,die in parallelen Schrägschnitten (73) (zur Längsrichtung der Flügelknochen) das Gelenk (64) und die Knochenkugeln(79,81) als Abfall abtrennt.Dazu hat jede Aufnahmetasche (65) einen etwa U-förmigen Querschnitt,der damit der anatomischen Form des flachliegenden Flügels angepasst sein kann.Zum Festhalten der zusammengeklappten Flügelknochen (62,63) während des Schneidens kann in einer solchen U-förmigen Haltetasche (65) eine obere Festhalteleiste (nicht dargestellt) o.dgl. auf den Knochen und dem Fleisch aufliegen.

Diese Schneidstation (71) ist mit zwei parallel zueinander umlaufenden Trennmessern(72) z.B. in Form von Kreissägeblättern ausgerüstet,die entgegengesetzt zur Bewegungsrichtung der Aufnahmetasche (65) sich um eine gemeinsame (angetriebene) Welle drehen,die im Maschinengestell ( 89) stationär gelagert ist.

Die Länge der Aufnahmetasche (65) ist kleiner als der Abstand der beiden Trennmesser (72) voneinander,so daß die Flügelknochen (72,73) nach dem Abtrennen weiterlaufen, während die Knochenkugeln(79,81) einerseits und das Gelenk (64) andererseits durch Schwerkraft abfallen und aus der Maschine entnommen werden können.

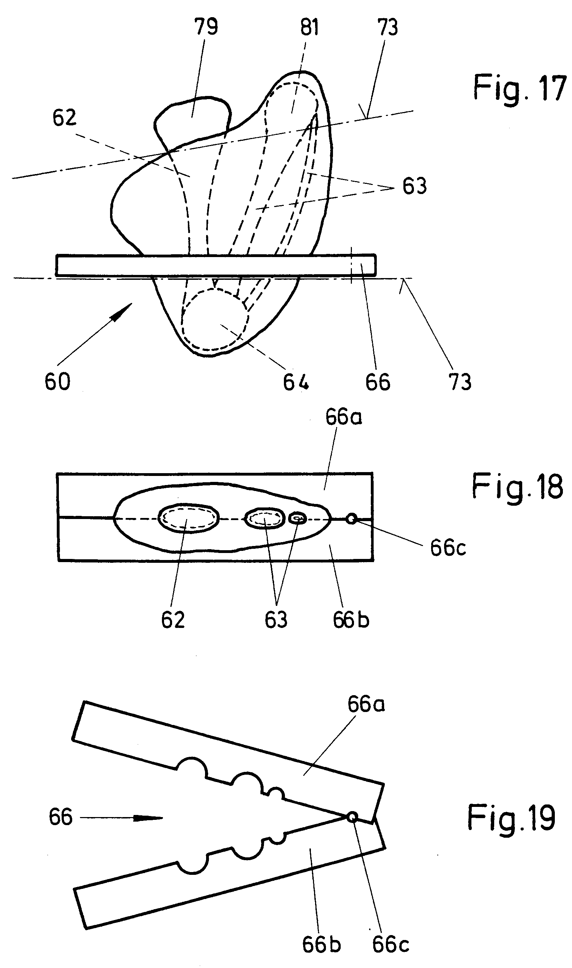

Diese Schneidstation (71) kann aber auch bevorzugt mit zwei umlaufenden Sägebändern (nicht dargestellt) ausgestattet sein,die einander nachgeschaltet im spitzen Winkel zueinander umlaufen und das Gelenk (64) einerseits und die Knochenkugeln(79,81) andererseits unter unterschiedlichen Schnittwinkeln zur Knochenlängsrichtung nacheinander abtrennen. (Fig.17)

Nach erfolgtem Schrägschnitt (73) werden die abgelängten Unterflügelknochen (63a,63b)und der Oberflügelknochen (62) einer Ablöseinrichtung (70) als Trenneinrichtung für das Fleisch,die Haut usw. zugeführt,die mit zwei gegeneinander verschiebbaren Lochplatten (66,67) mit zwei Löchern (74,75) ausgestattet sind (Fig.11-13 und 16),deren Lochdurchmesser dem Außendurchmesser der Elle (63a) und der Speiche(63b) des Unterflügelknochens (63) entsprechen.

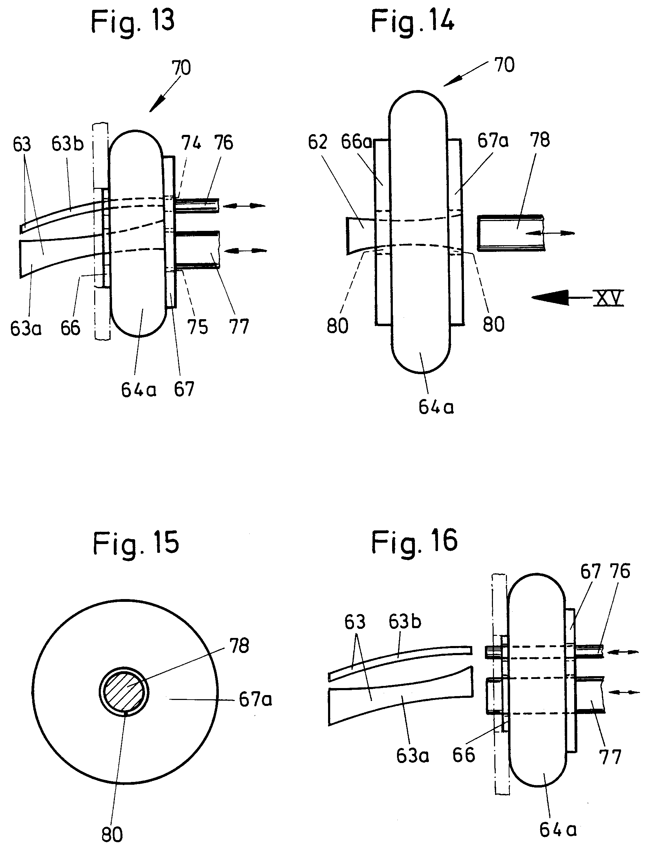

Mit der Gegeneinanderbewegung der Lochplatten (66,67) reissen die engumfassenden Innenkanten der Löcher (74,75) das Fleisch,die Sehnen und die verbindende Haut von den beiden Knochen (63a,63b) ab und drücken diese zunächst zusammen (Fig. 13 u. 16) ,während die ausgelösten Knochen ( 63), die aus den Lochplatten ( 66,67) vorstehen,von Hand oder mittels seitlicher Greifer entnommen werden können.

Bei der in Fig.14 und 15 dargstellten Ausführungsform der Lochplatten (66,67) ist nur ein Loch (80) in den Lochplatten (66,67) vorhanden,durch die der Oberflügelknochen (62) hindurchgedrückt wird,wobei die Innenkante des Loches jeweils als Abstreiffläche wirkt.

Es ist bevorzugt,die eine Lochplatte (66) fest anzuordnen und die andere Lochplatte (67) dazu beweglich zu lagern.

Weiterhin kann es bevorzugt sein,anstelle einer Lochplatte mit gewissem Durchmesser vorzusehen,welcher dem Knochendurchmesser entspricht,auch zwei Lochplatten mit größeren Löchern benachbart zu lagern,wobei durch Verschieben dieser Lochplatten in einer Ebene der wirksame Lochdurchmesser variabel verändert werden kann,um eine gute Trennwirkung der Innenkanten zu erzielen.

Zum Herausdrücken der verschiedenen Flügelknochen (62,63) sind den Lochplatten (66,67) senkrecht dazu hin-und herbewegliche angetriebene Stößel (76-78) vorgelagert,die sich gegen die Stirnflächen der Knochen (62,63) anlegen und diese (s.Bewegungspfeile) durch die Löcher (74,75,80) der Lochplatten (66,67) hindurchdrücken,so daß zusammen mit der sich bewegenden Lochplatte (77) das sich ablösende Fleisch (64a) usw. zu einem entnehmbaren Fleischstück zusammengepresst wird,das dann dem Verbraucher in jeder gewünschten Spezifizierung zugeführt werden kann.

Bei einer etwas abgeänderten Ausführungsform (Fig.17-19) kann an die Stelle einer einteiligen Lochplatte (66) eine geteilte Lochplatte (66a,66b) als Klammer verwendet werden, die von beiden Seiten die Flügelknochen (62,63) umfaßt, wobei ein Gelenk(66c) die beiden Lochplattenhälften (66a, 66b) zusammenhält.

Dabei kann diese geteilte Lochplatte (66a,66b) auch drei Löcher enthalten,so daß alle drei Knochen (62,63a,63b) gleichzeitig mit den in den Fig. 13,16 dargestellten und beschriebenen Stößeln ( 76-78) derart durch diese geteilte Lochplatte (66a,66b) hindurchgedrückt werden können,wobei ebenfalls das abgetrennte Fleisch zusammengepreßt wird, und die bewegliche Lochplatte (67) das Widerlager bildet.

Eine derartige geteilte Lochplatte (66a,66b) kann als gesonderte Halteklammer anstelle einer Aufnahmetasche (65) die Flügel (60,61) bei der Bearbeitung (Abschneiden des Gelenkes (64) und der Knochenkugeln (79,81) zunächst festhalten.

## Patentansprüche

1. Vorrichtung zum Entbeinen der Flügel (10, 11, 60, 61) von Geflügel o. dgl. mit auf einer in einem Maschinenbett (9, 79) umlaufenden Transporteinrichtung (19, 69) angeordneten Halterungen (18, 68), wobei die Halterungen (18, 68) mit je einer Queraufnahme (15, 17, 65, 67) für einen Flügel (10, 11, 60, 61) ausgestattet sind und wobei entlang der Bewegungsbahn der Halterungen (18, 68) nacheinander eine Schneidstation (21, 71) zur Zerteilung der Flügelknochen (12, 13, 62, 63) quer zu deren Längsrichtung und eine Trenneinrichtung (43, 44, 70) zum Ablösen des Fleischs o. dgl. von den Knochen (12, 13) angeordnet sind, dadurch gekennzeichnet, daß die Schneidstation (21, 71) zwei senkrecht zur Transportebene umlaufende Schneideinrichtungen (22, 72) zum jeweils vollständigen Durchtrennen der Flügel (10, 11, 60, 61) umfaßt.

2. Entbeinvorrichtung nach Anspruch 1,dadurch gekennzeichnet, daß als Queraufnahme eine im Querschnitt U-förmige Aufnahmetasche(15,65) drehbar (schwenkbar) auf der Transporteinrichtung (19,69) gelagert ist.

3. Entbeinvorrichtung nach Anspruch 1 oder 2,dadurch gekennzeichnet,daß oberhalb der Aufnahmetasche (15,65) eine bewegliche Festhalteleiste (28) angeordnet ist.

4. Entbeinvorrichtung nach einem der Ansprüche 1 bis 3, dadurch gekennzeichnet,daß zwischen zwei Aufnahmetaschen (15,16) ein senkrechter Zentrier-und Haltedorn (17) vorsteht.

5. Entbeinvorrichtung nach einem der Ansprüche 1 bis 4, dadurch gekennzeichnet,daß die Schneideinrichtung (22,72) als zwei parallel bezw. im Winkel zueinander umlaufenden Schnitt-oder Sägescheiben oder Bandsägeblätter ausgebildet sind.

6. Entbeinvorrichtung nach einen der Ansprüche 1 bis 5, dadurch gekennzeichnet,daß die Schneideinrichtung (22,72) quer zur Durchlaufrichtung verschiebbar gelagert ist.

7. Entbeinvorrichtung nach einem der Ansprüche 1 bis 6, dadurch gekennzeichnet,daß Greiferarme (32) paarweise gegeneinander in waagerechter Ebene schwenkbar gelagert sind.

8. Entbeinvorrichtung nach einem der Ansprüche 1 bis 7, dadurch gekennzeichnet,daß Trennmesser (43,44,49) in waagerechter Ebene schwenkbar gelagert sind.

9. Entbeinvorrichtung nach einem der Ansprüche 1 bis 8, dadurch gekennzeichnet,daß Schneiden (45,46) verschiebbar in einer schlitzförmigen Aufnahme(53,54) sich gegen eine darin bewegliche Druckfeder ( 35,42) abstützend gelagert sind.

10. Entbeinvorrichtung nach einem der Ansprüche 1 bis 9, dadurch gekennzeichnet,daß seitliche Anschläge (26,27) zur Begrenzung der nach außen gerichteten Bewegung eines abgeschnittenen Knochenteiles vorgesehen sind.

11. Entbeinvorrichtung nach einem der Ansprüche 1 bis 10, dadurch gekennzeichnet,daß Widerlagerplatten (59,66,67) wie Lochplatten mit Abstreifkanten zum Herausdrücken von Knochenteilen aus dem Fleisch vorgesehen sind.

12. Entbeinvorrichtung nach einem der Ansprüche 1 bis 11, dadurch gekennzeichnet,daß mehrere Trennmesser (43,44, 49,50 (versetzt auf einem Kreis) sich gegenüberstehen.

13. Entbeinvorrichtung nach einem der Ansprüche 1 bis 12, dadurch gekennzeichnet,daß die Trenneinrichtung (70) mit gegeneinander beweglichen Lochplatten (66,67) mit den Durchmessrern der Knochen (62,63 entsprechenden Löchern (74,75,80) ausgestattet ist und daß mindestens eine die Knochen (62,63) durch diese Löcher ( 74,75,80) drückende Einrichtung (76,77) vorgesehen ist.

14. Entbeinvorrichtung nach einem der Ansprüche 1 bis 13, neben einer feststehenden Lochplatte (66) eine verschiebbare Lochplatte (67) schwenkbar gelagert ist.

15. Entbeinvorrichtung nach einem der Ansprüche 1 bis 14, dadurch gekennzeichnet,daß jeweils durch die Löcher (74, 75) gleitende Stößel (76-78) in mehreren Ebenen beweglich gelagert sind.

16. Entbeinvorrichtung nach einem der Ansprüche 1 bis 15, dadurch gekennzeichnet,daß die feststehende Lochplatte (66) mit die entbeinten Knochen (62,63) führenden Rohren (32) ausgestattet ist.

17. Entbeinvorrichtung nach einem der Ansprüche 1 bis 16, dadurch gekennzeichnet,daß mindestens eine Lochplatte (66) als geteilte Lochplatte (66a,66ab) ausgebildet ist.

18. Entbeinvorrichtung nach einem der Ansprüche 1 bis 17, dadurch gekennzeichnet,daß die geteilte Lochplatte (66a, 66b) mit drei Löchern als Klammer ausgebildet ist.

## Claims

1. A device for boning the wings (10, 11, 60, 61) of poultry or the like having mountings (18, 68) disposed on a transport device (19, 69) rotating in a machine bed (9, 79), with the mountings (18, 68) each being equipped with a transverse receptacle (15, 17, 65, 67) for a wing (10, 11, 60, 61) and with a cutting station (21, 71) for separating the wing bones (12, 13, 62, 63) transversally angles to their longitudinal direction and a separating device (43, 44, 70) for removing the meat or the like from the bones (12, 13) being disposed one after the other along the path of movement of the mountings (18, 68),
**characterised in that** the cutting station (21, 71) comprises two cutting devices (22, 72) rotating perpendicular to the transport plane for the complete separation of the wings (10, 11, 60, 61) in each case.

2. A boning device according to Claim 1,
**characterised in that** a pouch (15, 65) having a U-shaped cross section is rotatably (swivellably) mounted on the transport device (19, 69) as the transverse receptacle.

3. A boning device according to Claim 1 or 2,
**characterised in that** a movable securing bar (28) is disposed above the pouch (15, 65).

4. A boning device according to one of Claims 1 to 3,
**characterised in that** a perpendicular centring and retention spike (17) projects between two pouches (15, 16).

5. A boning device according to one of Claims 1 to 4,
**characterised in that** the cutting device (22, 72) are constructed as two cutting or saw discs or endless saw blades rotating parallel or at an angle to one another respectively.

6. A boning device according to one of Claims 1 to 5,
**characterised in that** the cutting device (22, 72) is displaceably mounted at right angles to the direction of passage.

7. A boning device according to one of Claims 1 to 6,
**characterised in that** gripper arms (32) are swivel-mounted in pairs towards one another in the horizontal plane.

8. A boning device according to one of Claims 1 to 7,
**characterised in that** dividing knives (43, 44, 49) are swivel-mounted in a horizontal plane.

9. A boning device according to one of Claims 1 to 8,
**characterised in that** cutting blades (45, 46) are displaceably mounted in a slit-shaped receptacle (53, 54) supported against a compression spring (35, 42) moveable therein.

10. A boning device according to one of Claims 1 to 9,
**characterised in that** lateral stops (26, 27) are provided to limit the outwardly directed movement of a cut-off bone part.

11. A boning device according to one of Claims 1 to 10,
**characterised in that** abutment plates (59, 66, 67) such as perforated plates having stripping edges for pressing bone parts out of the meat are provided.

12. A boning device according to one of Claims 1 to 11,
**characterised in that** several dividing knives (43, 44, 49 50) are situated opposite one another (staggered on a circle).

13. A boning device according to one of Claims 1 to 12,
**characterised in that** the separating device (70) is equipped with perforated plates (66, 67) which can be moved towards one another and having holes (74, 75, 80) corresponding to the diameters of the bones (62,63),
**and in that** at least one device forcing the bones (62, 63) through these holes (74, 75, 80) is provided.

14. A boning device according to one of Claims 1 to 13,
**characterised in that** a displaceable perforated plate (67) is swivel-mounted next to a fixed perforated plate (66).

15. A boning device according to one of Claims 1 to 14,
**characterised in that** rams (76 - 78) sliding through the holes (74, 75) in each case are movably mounted in several planes.

16. A boning device according to one of Claims 1 to 15,
**characterised in that** the fixed perforated plate (66) is equipped with pipes (32) guiding the boned bones (62, 63).

17. A boning device according to one of Claims 1 to 16,
**characterised in that** at least one perforated plate (66) is constructed as a divided perforated plate (66a, 66ab).

18. A boning device according to one of Claims 1 to 17,
**characterised in that** the divided perforated plate (66a, 66b) is constructed with three holes as a clamp.

## Revendications

1. Dispositif pour désosser les ailes (10, 11, 60, 61) de volailles ou autres volatiles, comprenant des organes de serrage (18, 68), montés sur un dispositif de transport (19, 69), circulant dans un banc de machine (9, 79), chaque organe de serrage étant équipé d'un logement transversal (15, 17, 65, 67), dans lequel s'engage une aile (10, 11, 60, 61), et un poste de découpage (21, 71), destiné à découper les os des ailes (12, 13, 62, 63) transversalement par rapport à leur sens longitudinal et un poste de séparation (43, 44, 70), destiné à dépouiller la viande ou autre des os (12, 13), étant montés l'un derrière l'autre le long de la voie de déplacement des organes de serrage (18, 68), caractérisé en ce que le poste de découpage (21, 71) est muni de dispositifs de coupe (22, 72), circulant perpendiculairement au plan de transport, destinés chacun à trancher entièrement les ailes (10, 11, 60, 61).

2. Dispositif pour désosser selon la revendication 1, caractérisé en ce que le logement transversal est une poche de positionnement (15, 65), dont la section est en forme de U, montée sur le dispositif de transport (19, 69) de manière à pouvoir suivre des mouvements de rotation (pivotement).

3. Dispositif pour désosser selon l'une des revendications 1 ou 2, caractérisé en ce qu'une baguette de blocage mobile (28) est montée au-dessus de la poche de positionnement (15, 65).

4. Dispositif pour désosser selon l'une des revendications 1 à 3, caractérisé en ce qu'un mandrin de centrage et de serrage (17) est monté entre deux poches de positionnement (15, 16).

5. Dispositif pour désosser selon l'une des revendications 1 à 4, caractérisé en ce que le dispositif de coupe (22, 72) est formé de deux meules de sciage ou de coupe ou de deux rubans de scie rotatifs, parallèles ou perpendiculaires l'un par rapport à l'autre.

6. Dispositif pour désosser selon l'une des revendications 1 à 5, caractérisé en ce que le dispositif de coupe (22, 72) est monté de manière à pouvoir se déplacer transversalement au sens de déplacement.

7. Dispositif pour désosser selon l'une des revendications 1 à 6, caractérisé en ce que des bras à griffes (32) sont montés en couple l'un en face de l'autre, de manière à pouvoir pivoter dans un plan horizontal.

8. Dispositif pour désosser selon l'une des revendications 1 à 7, caractérisé en ce que des lames de tranchage (43, 44, 49) sont montées dans un plan horizontal.

9. Dispositif pour désosser selon l'une des revendications 1 à 8, caractérisé en ce que des lames de coupe (45, 46) sont montées de manière à pouvoir se déplacer dans un logement (53, 54) en forme de fente, en s'appuyant contre un ressort de pression (35, 42) mobile dans ledit logement.

10. Dispositif pour désosser selon l'une des revendications 1 à 9, caractérisé en ce que des butées latérales (26, 27) sont prévues pour arrêter le mouvement vers l'extérieur d'une partie d'os coupée.

11. Dispositif pour désosser selon l'une des revendications 1 à 10, caractérisé en ce qu'il est prévu de monter des plaques de butée (59, 66, 67), conçues comme des plaques perforées avec des arêtes de dépouillage, destinées à pousser les os hors de la viande.

12. Dispositif pour désosser selon l'une des revendications 1 à 11, caractérisé en ce que plusieurs lames de tranchage (43, 44, 49, 50) (décalées sur un cercle) sont montées les unes en face des autres.

13. Dispositif pour désosser selon l'une des revendications 1 à 12, caractérisé en ce que le dispositif de tranchage (70) est muni de plaques perforées (66, 67), susceptibles de se déplacer l'une contre l'autre, dont les orifices (74, 75, 80) correspondent au diamètre des os (62, 63), et en ce qu'il est prévu de monter au moins un organe (76, 77), destiné à pousser les os (62, 63) à travers ces orifices (74, 75, 80).

14. Dispositif pour désosser selon l'une des revendications 1 à 13, caractérisé en ce qu'une plaque perforée mobile (67) est montée, de manière à pouvoir pivoter, à côté d'une plaque perforée fixe (66).

15. Dispositif pour désosser selon l'une des revendications 1 à 14, caractérisé en ce que des poussoirs (76 - 78), passant par les orifices (74, 75), sont montés de manière à être mobiles dans plusieurs plans.

16. Dispositif pour désosser selon l'une des revendications 1 à 15, caractérisé en ce que la plaque perforée fixe (66) est munie de tubes (32), destinés à guider les os (62, 63) désossés.

17. Dispositif pour désosser selon l'une des revendications 1 à 16, caractérisé en ce qu'au moins une plaque perforée (66) est conçue comme une plaque perforée divisée en deux parties (66a, 66b).

18. Dispositif pour désosser selon l'une des revendications 1 à 17, caractérisé en ce que la plaque perforée divisée en deux (66a, 66b) est munie de trois orifices formant des serre-joints.
